# FASCICULE DE BREVET EUROPEEN

(11) **EP 0 378 465 B1**
(45) Date de publication et mention de la délivrance du brevet: **15.12.1993**
(21) Numéro de dépôt: 90400052.8
(22) Date de dépôt: 08.01.1990
(51) Int. Cl.: G08B 23/00, G08B 25/00

(54) **Système modulaire de surveillance d'installations industrielles**
Modularüberwachungssystem für industrielle Einrichtungen
Modular surveillance system for industrial installations

(30) Priorité: 09.01.1989 FR 8900162
(43) Date de publication de la demande: 18.07.1990
(73) Titulaire: AEROSPATIALE Société Nationale Industrielle, 75781 Paris Cédex 16 (FR)
(72) Inventeur: Leonetti, Jean-Pierre, F-13119 Saint Savourin (FR)
(74) Mandataire: Mongrédien, André

(56) Documents cités:
- EP-A- 0 022 026
- GB-A- 2 156 120
- GB-A- 2 194 119
- US-A- 4 056 684
- US-A- 4 427 974

## Description

La présente invention concerne un système modulaire de surveillance d'installations industrielles. Elle permet notamment la surveillance à distance (télé-surveillance) d'installations industrielles variées, dispersées dans un vaste centre industriel.

A titre d'exemple, ces installations peuvent être des compresseurs, des chaufferies, des climatiseurs, des ascenseurs, des réseaux d'eau, de gaz ou d'électricité, des centres d'usinage... Le document US-A- 4 056 684 divulgue un système de surveillance d'installations industrielle représentatif de l'état de la technique.

L'exploitation rationnelle d'un centre industriel nécessite la connaissance, quasiment en temps réel, d'un nombre important d'informations concernant au moins les installations importantes qui s'y trouvent. La connaissance précise de ces informations, quasiment à l'instant où des incidents de fonctionnement se produisent sur ces installations, permet d'intervenir sur celles-ci pour corriger des anomalies, améliorer des réglages ...

La mise en place dans un centre industriel d'un système de télé-surveillance qui contrôle en permanence et simultanément toutes les informations relatives au fonctionnement des principales installations présentes dans ce centre permet de simplifier l'exploitation de ces installations, de tranquilliser les utilisateurs (qui sont sûrs d'être avertis si des anomalies se produisent) et de réduire les coûts d'exploitation (main d'oeuvre de surveillance, consommation d'énergie par exemple électrique, recherches et interventions sur place ...).

On connaît déjà deux systèmes de surveillance à distance d'installations industrielles, à savoir :
- le système dit "fil à fil" qui comprend une pluralité de câbles électriques multi-conducteurs, chaque câble reliant un emplacement à surveiller à un poste central de surveillance pourvu de moyens de visualisation et de commande, d'où autant de câbles que d'emplacements à surveiller,
- le système dit "informatisé" qui comprend un ordinateur central dans le poste central de surveillance et, sur chaque emplacement à surveiller, un ou plusieurs ordinateurs -ou automates- locaux (un par installation sur cet emplacement) ; chaque ordinateur local est intégré à l'installation qu'il est chargé de surveiller et tous les ordinateurs locaux sont reliés à l'ordinateur central par l'intermédiaire d'un bus à deux fils.

Ces systèmes connus présentent des inconvénients :

Le système fil à fil est difficile à modifier et à dépanner et pose des problèmes d'extension et de câblage.

Le système informatisé, bien qu'il ne pose pas de problème de câblage, est un système complexe qui nécessite de lourds investissements. Pour les extensions d'un tel système, il faut fait appel à divers spécialistes notamment en matériel informatique et en logiciels. De plus, les délais de modification de ce système sont longs et les essais ne sont pas faciles car ils doivent être faits à distance.

La présente invention concerne un système modulaire permettant la télé-surveillance d'installations industrielles, qui remédie aux inconvénients précédents.

De façon précise, la présente invention a pour objet un système de surveillance d'installations industrielles réparties sur une pluralité de sites, certaines des installations étant surveillées à distance à partir d'un poste de surveillance tandis que d'autres installations le sont à l'endroit où elles se trouvent, système caractérisé en ce qu'il comprend, pour chaque installation, un ou plusieurs capteurs de grandeurs physiques qui sont relatives à cette installation et sont à surveiller, ces capteurs étant prévus pour fournir, sous forme de signaux électriques, des informations relatives à ces grandeurs physiques, et un ensemble modulaire qui est électriquement relié aux capteurs et prévu pour traiter ces informations, en ce que chaque ensemble modulaire comprend au moins un module, ce module étant appelé module de saisie et prévu pour recevoir les informations fournies par les capteurs, pour transformer ces informations en états binaires et pour envoyer ces informations ainsi transformées à d'autres modules que l'ensemble modulaire est susceptible de comporter, à savoir :
- un module appelé module d'analyse, prévu au moins pour visualiser les états binaires fournis par le module de saisie, et
- un module appelé module d'action, prévu pour déclencher, sur ordre d'au moins l'un des modules de saisie et d'analyse, des organes pneumatiques,

et en ce que chaque ensemble modulaire correspondant à une installation à surveiller à distance comprend en outre un module appelé module de transmission, prévu pour transmettre à distance des informations susceptibles d'être fournies par les modules de saisie, d'analyse et d'action correspondants, par l'intermédiaire d'un réseau téléphonique qui relie les sites les uns aux autres et au poste de surveillance, chaque module de transmission étant connecté à ce réseau téléphonique, le poste de surveillance comportant des modules d'analyse permettant la visualisation d'informations qui sont fournies par les ensembles modulaires associés aux installations à surveiller à distance et qui sont transmises par le réseau téléphonique.

Le système objet de l'invention peut comprendre en outre d'autres modules d'analyse prévus pour la surveillance à distance de certaines installations à partir d'autres postes de surveillance reliés au réseau téléphonique.

Chaque ensemble modulaire peut comprendre en outre un module d'alimentation, prévu pour alimenter, en cas de besoin, les autres modules de cet ensemble en énergie électrique et/ou les organes pneumatiques en énergie pneumatique par l'intermédiaire du module d'action.

L'originalité du système objet de l'invention réside dans sa structure modulaire. Chacun des ensembles qu'il comporte est une combinaison de modules spécifiques de types différents, chaque module étant réalisable simplement à partir de composants industriels courants. Les modules peuvent être associés suivant plusieurs combinaisons possibles pour exécuter à distance des tâches multiples de surveillance à distance, d'information et éventuellement d'intervention active sur les diverses installations qui sont dispersées dans le centre.

La structure modulaire du système objet de l'invention implique que ce système est facilement modifiable (par adjonction ou suppression d'un ou de plusieurs modules sur une ou plusieurs installations). On notera d'ailleurs que tous les modules provenant d'un emplacement que l'on ne souhaite plus surveiller peuvent être réutilisés sur un nouvel emplacement sans pertes de câblage. En outre, le système est facilement réparable (par remplacement du ou des modules défectueux) et ne pose pas de problème d'extension : il est facile d'ajouter des modules sur une ou des installations que l'on désire surveiller.

De plus, la structure modulaire du système permet un investissement progressif (et d'ailleurs moins coûteux que dans le cas du système informatisé) dans le centre. En outre, les essais de fonctionnement du système sont facilités par le fait qu'ils peuvent être intégralement réalisés sur le site, permettant ainsi une surveillance visuelle directe lors de leur mise au point initiale et, éventuellement, de leur vérification en fonctionnement.

Le câblage du système objet de l'invention est simple du fait que ce système utilise exclusivement les fils d'un réseau téléphonique existant dans le centre en tant que moyen de liaison entre divers ensembles modulaires en place dans ce centre et le ou les postes de surveillance.

Par ailleurs, ce système est simple et sa mise en oeuvre ne nécessite que peu d'études préalables. Il s'intègre facilement à un centre industriel pourvu d'un réseau téléphonique entre les différents sites qui composent ce centre et son installation est rapide : il suffit de mettre en place les divers capteurs et ensembles modulaires et de brancher sur le réseau téléphonique ceux des ensembles modulaires qui correspondent à des installations que l'on veut surveiller à distance. Aucun câblage interne des installations à surveiller n'est nécessaire.

Le système objet de l'invention, qui utilise de simples capteurs pour vérifier le bon fonctionnement des divers installations à surveiller est totalement indépendant de ces installations. En effet, quels que soient les paramètres choisis pour vérifier le bon fonctionnement de ces installations, ces paramètres sont issus de capteurs qui sont indépendants et installés, par exemple de façon périphérique, sur les organes à surveiller des installations et ne nécessitent par conséquent aucun dispositif supplémentaire à intégrer dans les installations en question.

Certains des capteurs associés à un ensemble modulaire pouvant être aptes à fournir en sortie des informations sous forme de signaux analogiques et chaque module de saisie peut comprendre :
- des relais de fonction à seuils réglables, ces seuils étant destinés à être préréglés par les utilisateurs du système, chaque relais de fonction étant prévu pour recevoir les informations fournies par l'un de ces capteurs, pour comparer ces informations au seuil correspondant et pour transformer lesdites informations en indications tout ou rien sous forme de signaux numériques, suivant que le seuil est atteint ou pas, et
- des moyens d'émission prévus pour envoyer ces signaux numériques aux autres modules que l'ensemble modulaire est susceptible de comporter.

Le système peut comprendre en outre, sur une ou plusieurs installations à surveiller, d'autres capteurs prévus pour fournir directement des indications tout ou rien sous forme de signaux numériques, ces derniers étant envoyés à l'entrée desdits moyens d'émission correspondant à ces installations.

Le module d'analyse peut comprendre des moyens de visualisation synoptique, prévus pour la visualisation des états binaires fournis par chaque module de saisie associé, et des moyens d'émission-réception prévus pour recevoir les signaux relatifs aux états binaires fournis par ce module de saisie et pour commander en conséquence les moyens de visualisation synoptique.

Le module d'analyse peut être associé à un module d'action et comprendre en outre :
- des moyens de télécommande manuelle d'un ou de plusieurs organes pneumatiques en fonction des états binaires visualisés, ces moyens de télécommande étant prévus pour fournir en sortie des signaux de commande desdits organes, et
- des moyens d'émission-réception prévus pour recevoir ces signaux de commande et pour envoyer en conséquence au module d'action des signaux d'activation desdits organes.

Dans certains ensembles modulaires, le module d'analyse peut être associé à un module d'action et comprendre :
- un automate programmable prévu pour la commande d'un ou de plusieurs organes pneumatiques en fonction de signaux fournis par le module de saisie associé, cet automate programmable étant prévu pour fournir en sortie des signaux de commande desdits organes, et
- des moyens d'émission-réception prévus pour transmettre à l'automate programmable les signaux fournis par le module de saisie, pour recevoir les signaux de commande issus de l'automate programmable et pour envoyer en conséquence au module d'action des signaux d'activation desdits organes.

Le module d'action peut comprendre :
- des moyens de commande d'électrovannes prévues pour ouvrir ou fermer des circuits pneumatiques qui sont reliés aux organes pneumatiques et sont destinés à envoyer un gaz comprimé dans ces organes pneumatiques pour commander ceux-ci, et
- des moyens d'émission-réception prévus pour recevoir des signaux d'activation des organes pneumatiques, issus du module de saisie et/ou du module d'analyse et pour agir en conséquence sur les moyens de commande des électrovannes.

Le module d'action peut comprendre en outre :
- des moyens de visualisation synoptique des actions déclenchées par ce module d'action, et
- des moyens d'émission-réception prévus pour recevoir les signaux correspondant à des capteurs qui détectent l'activation des organes pneumatiques et pour commander en conséquence les moyens de visualisation synoptique associés.

Le module de transmission peut comprendre :
- un modulateur-démodulateur prévu pour la transmission, par l'intermédiaire du réseau téléphonique, des informations susceptibles d'être fournies par les modules de saisie, d'analyse et d'action, et
- des moyens de réception prévus pour recevoir des signaux issus des modules de saisie, d'analyse et d'action, et pour commander en conséquence le modulateur-démodulateur.

Le module de transmission peut comprendre en outre au moins l'un des deux moyens suivants :
- un transmetteur vocal prévu pour donner l'alarme à distance par l'intermédiaire du réseau téléphonique,
- une interface pour calculateur, ce calculateur étant destiné à traiter les informations fournies par les modules de saisie, d'analyse et d'action.

Le module d'alimentation peut comprendre une capacité pneumatique prévue pour alimenter en gaz comprimé lesdits organes pneumatiques, par l'intermédiaire des électrovannes du module d'action.

Enfin, le module d'alimentation peut comprendre (en variante ou en plus) :
- une source de courant électrique qui est prévue pour alimenter les autres modules en courant électrique, et
- des moyens de détection de défaut de fonctionnement de cette source de courant électrique, prévus pour informer le module de transmission de ce défaut.

La présente invention sera mieux comprise à la lecture de la description suivante d'exemples de réalisation donnés à titre purement indicatif et nullement limitatif, en référence aux dessins annexés sur lesquels :
- la figure 1 illustre schématiquement un système de surveillance conforme à l'invention, permettant de surveiller des installations industrielles réparties sur différents sites d'un centre industriel,
- la figure 2 est une vue schématique d'un ensemble modulaire utilisable dans le système représenté sur la figure 1 et composé de cinq modules, à savoir un module de saisie, un module d'analyse, un module d'action, un module de transmission et un module d'alimentation,
- la figure 3 est une vue schématique d'un mode de réalisation particulier du module de saisie,
- la figure 4 est une vue schématique d'un mode de réalisation particulier du module d'analyse,
- la figure 5 est une vue schématique d'un mode de réalisation particulier du module d'action,
- la figure 6 est une vue schématique d'un mode de réalisation particulier du module de transmission, et
- la figure 7 est une vue schématique d'un mode de réalisation particulier du module d'alimentation.

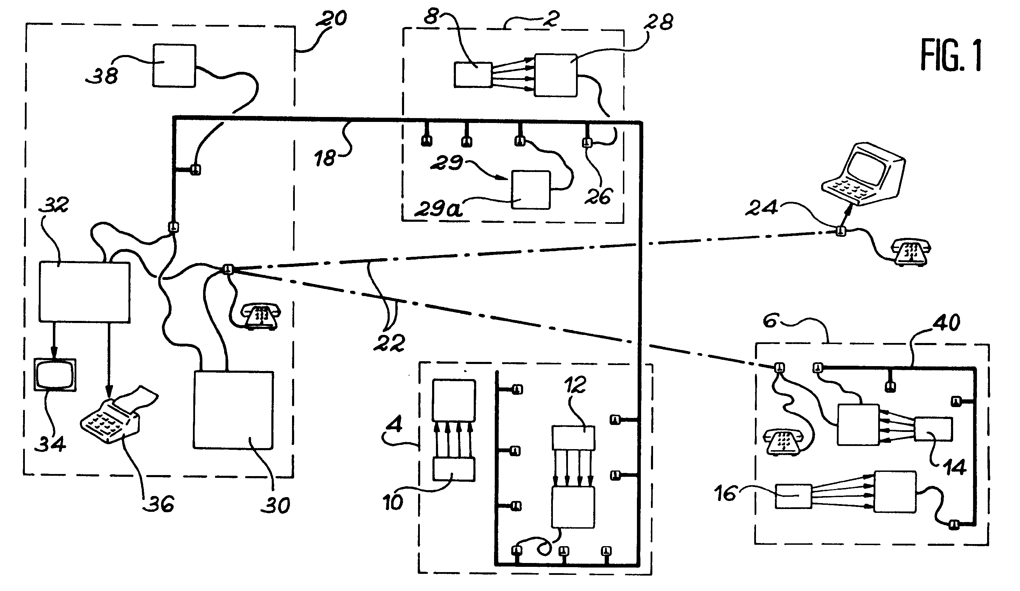

Sur la figure 1, on a représenté schématiquement un système de surveillance conforme à l'invention, qui est installé sur un centre industriel composé d'une pluralité de sites 2, 4, 6 ... Chaque site comporte une ou plusieurs installations à surveiller. De telles installations portent les références 8, 10, 12, 14 et 16 sur la figure 1. Certaines installations, telles que l'installation 10, peuvent être surveillées à l'endroit où elles se trouvent tandis que d'autres installations sont surveillées à distance. A cet effet, on utilise conformément à l'invention un réseau téléphonique 18 que comporte le centre et qui relie les différents sites de celui-ci à un poste central de surveillance 20. Le central téléphonique dont est bien entendu muni le réseau téléphonique 18 n'est pas représenté sur la figure 1. Pour la mise en oeuvre de l'invention ce réseau téléphonique ne doit pas dépasser 10 kilomètres environ. C'est pourquoi, lorsque le centre industriel, qui peut être très vaste, comporte des sites éloignés de plus de 10 kilomètres du poste central de surveillance, tels que le site référencé 6 sur la figure 1, on utilise, pour des liaisons entre le poste central de surveillance et de tels sites, le réseau téléphonique public 22 (réseau PTT). Ce réseau téléphonique public 22 est également utilisé pour les liaisons entre le centre et des endroits éloignés 24 en lesquels certaines personnes se trouvent et doivent pouvoir être contactées rapidement en cas d'urgence. Ces personnes disposent d'un téléphone et d'un terminal tel que celui qui est connu sous le nom MINITEL (marque déposée) ou encore d'un dispositif du type "EUROSIGNAL" par exemple.

Sur les différents sites et dans le poste central de surveillance on trouve un grand nombre de prises téléphoniques 26 qui sont montées sur le réseau 18. Toute installation à surveiller, telle que l'installation 8, est munie d'un ensemble modulaire 28 qui sera décrit par la suite. Comme on l'a vu, certaines installations peuvent être surveillées sur place tandis que d'autres sont surveillées à distance à partir du poste central. Alors, il suffit de brancher l'ensemble modulaire correspondant sur le réseau 18 par l'intermédiaire d'une prise téléphonique 26 pour que cet ensemble soit relié au poste central.

Certaines installations peuvent être surveillées à distance à partir d'autres endroits 29 que le poste central 20 à distance (poste de gardiennage, service entretien ou poste d'astreinte par exemple). En ces endroits, on place alors des ensembles modulaires 29a adaptés à cette surveillance et comportant des modules appelés modules d'analyse, qui seront décrits par la suite et qui sont connectés au réseau téléphonique.

Dans le poste central, on trouve des moyens de visualisation 30 qui sont reliés au réseau 18 et comportent une pluralité de modules d'analyse, chacun de ces derniers étant associé à une installation que l'on veut surveiller depuis le poste central 20.

On trouve également un dispositif appelé "consignateur d'états" 32 donnant en clair l'état de divers modules de saisie qui sont associés, comme on le verra par la suite, aux installations à surveiller à partir du poste central.

Le consignateur d'états 32 peut être muni d'un écran de visualisation 34 et d'une imprimante 36.

On peut également placer dans le poste central 20 un ou plusieurs modules d'analyse 38, qui sont connectés au réseau téléphonique 18 et qui sont utilisés pour la surveillance d'installations temporaires.

Sur la figure 1, on voit également sur le site éloigné 6 un réseau téléphonique 40 qui est bien entendu muni d'un central téléphonique (non représenté) et qui est relié au poste central 20 par le réseau public 22. Ainsi, les moyens de visualisation 30 et le consignateur d'états 32 peuvent recevoir les informations issues des ensembles modulaires qui sont placés sur le site éloigné 6 et qui sont associés aux installations de ce site que l'on souhaite surveiller à distance.

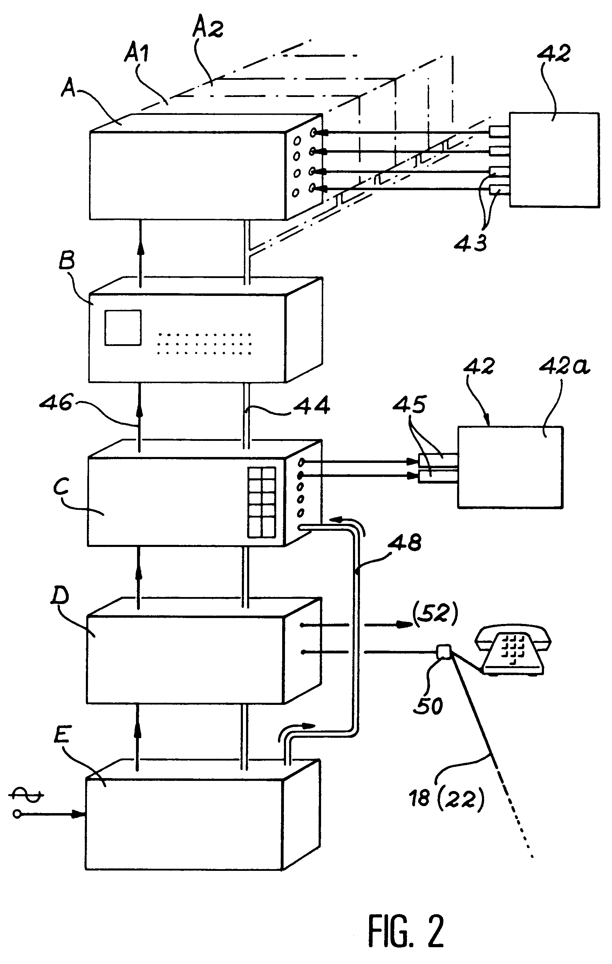

Sur la figure 2, on a représenté schématiquement un ensemble modulaire utilisable dans la présente invention. Cet ensemble modulaire comprend cinq modules, à savoir un module de saisie A, un module d'analyse B, un module d'action C, un module de transmission D et un module d'alimentation E. Bien entendu, tout ensemble modulaire utilisé dans la présente invention comprend au moins un module de saisie A mais pas nécessairement les quatre autres modules B, C, D, E.

Le module de saisie A est muni de différents capteurs 43 qui sont mis en place sur l'installation 42 que l'on veut surveiller avec l'ensemble modulaire. Ces capteurs fournissent en sortie des signaux représentatifs de grandeurs physiques, ou paramètres, de l'installation, qu'il s'agit de surveiller. Le nombre N de capteurs que l'on peut associer à un module de saisie est limité. C'est pourquoi, lorsqu'une installation à surveiller nécessite un plus grand nombre de capteurs, on utilise plusieurs modules de saisie A, A1, A2 montés en parallèle sur le bus à deux fils 44 qui relie les différents modules de l'ensemble modulaire entre eux. Chaque module de saisie fournit en sortie des signaux "tout ou rien", représentatifs des valeurs des paramètres surveillés.

Le module d'analyse B permet notamment de visualiser l' état de l'installation quant aux divers paramètres surveillés.

Le module d'action C permet de déclencher, si nécessaire, des organes pneumatiques 45 pour exécuter des actions linéaires ou rotatives sur l'installation 42 ou sur une autre installation 42a, en fonction d'ordres reçus des modules A ou B.

Le module de transmission D regroupe les informations fournies par les modules de saisie A, d'analyse B et d'action C pour les transmettre à distance par le réseau téléphonique 18 et/ou par le réseau public 22.

Enfin, l'ensemble modulaire représenté sur la figure 2 comprend un module d'alimentation E. Ce module permet d'alimenter en énergie électrique les autres modules A, B, C et D lorsqu'une panne de secteur se produit et/ou d'alimenter en énergie pneumatique (air ou azote comprimé) les organes pneumatiques mentionnés précédemment lorsque l'alimentation normale de ceux-ci est en panne ou lorsque le site n'est pas muni d'un réseau distributeur d'énergie pneumatique. L'alimentation en énergie électrique des modules A, B, C, D s'effectue par l'intermédiaire d'une ligne électrique 46 qui relie le module E à ces modules A, B, C, D. L'alimentation en énergie pneumatique s'effectue quant à elle par l'intermédiaire d'un conduit 48 qui relie le module E au module C.

Comme on l'a déjà indiqué, le système objet de l'invention est un système modulaire ; tout ensemble modulaire de ce système ne comprend pas nécessairement les cinq modules A à E mentionnés plus haut : certaines installations peuvent être surveillées sur place et de telles installations peuvent comporter uniquement le module A et le module B pour avertir les utilisateurs se trouvant à proximité de ces installations des problèmes de fonctionnement que celles-ci peuvent présenter. Un module C peut être ajouté à ces modules A et B si des actions sont nécessaires sur certains organes pneumatiques que peuvent comporter lesdites installations, pour résoudre ces problèmes.

Lorsqu'une installation est surveillée simplement depuis l'endroit où elle se trouve, le module de transmission D est inutile. Un tel module D est intégré à un ensemble modulaire lorsque l'on veut surveiller l'installation correspondante à distance, à partir du poste central de surveillance ou à partir d'un service d'entretien ou d'un poste d'astreinte par exemple. L'ensemble modulaire est alors branché sur le réseau téléphonique par l'intermédiaire de ce module de transmission D (et d'une prise téléphonique 50). Comme on le voit sur la figure 2, ce module de transmission D peut comporter une sortie 52 permettant l'envoi d'informations à un ordinateur de gestion.

Dans le poste central de surveillance ou dans d'autres postes de surveillance on trouve un ou plusieurs modules d'analyse B permettant la visualisation des données fournies (par l'intermédiaire de modules de saisie A) par les capteurs associés aux installations qui sont surveillées à partir de ces postes. Ces modules B sont bien entendu munis d'un modulateur-démodulateur (modem) qui est connecté au réseau téléphonique.

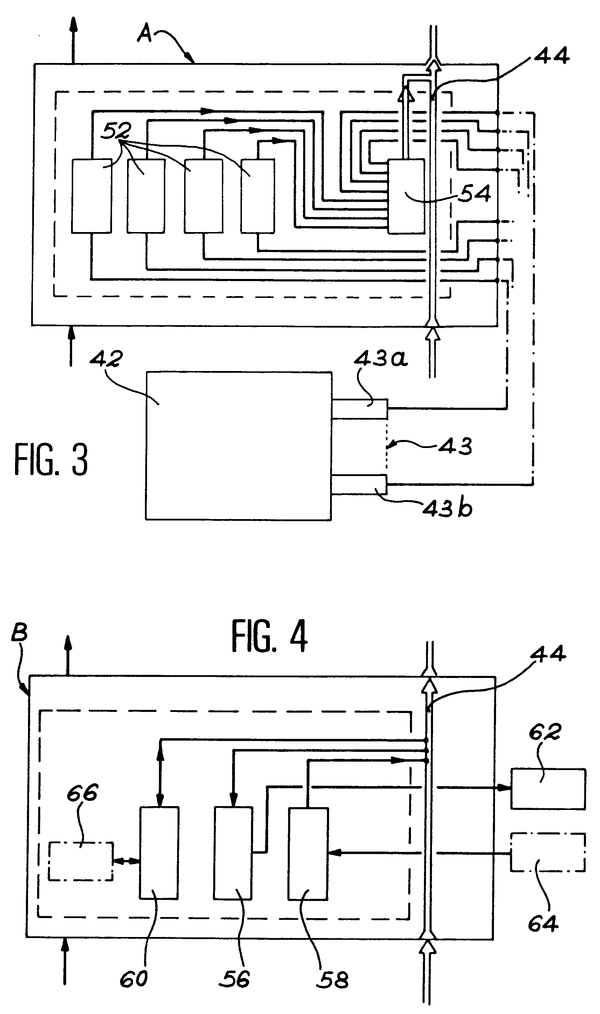

Sur la figure 3, on a représenté schématiquement un mode de réalisation particulier du module de saisie A. Il est destiné à recevoir des informations fournies par une pluralité de capteurs 43 qui sont mis en place sur une installation 42 à surveiller : on peut utiliser des capteurs 43a fournissant des informations sous forme de signaux analogiques et/ou d'autres capteurs 43b fournissant directement des informations "tout ou rien" et donc des signaux numériques.

Le module A représenté sur la figure 3 comprend des relais de fonction 52 et le nombre de capteurs 43a utilisables avec ce module A est inférieur ou égal au nombre de ces relais de fonction 52. Chacun de ces derniers comprend un dispositif à seuil réglable qui est préréglé par les utilisateurs. Chaque capteur 43a est associé à un relais de fonction 52 qui reçoit en entrée les signaux analogiques fournis par ce capteur 43a pour les transformer en indications "tout ou rien" suivant que le seuil est atteint ou pas.

Le module de saisie A représenté sur la figure 3 comprend également des moyens d'émission 54 qui reçoivent en entrée les signaux de sortie (indications "tout ou rien") des différents relais de fonction 52 et les envoient sur le bus à deux fils 44 en direction du ou des modules suivants.

Des capteurs 43b peuvent être associés au module A. Les indications "tout ou rien" fournies en sortie par chacun de ces capteurs 43b sont envoyées directement à l'entrée des moyens d'émission 54 pour être transmis au module suivant par l'intermédiaire du bus à deux fils 44.

Sur la figure 4, on a représenté schématiquement un mode de réalisation particulier du module d'analyse B. Ce module B est destiné à la visualisation des signaux "tout ou rien" fournis par le module de saisie A et correspondant aux différents capteurs qui sont associés à ce module de saisie A. Le module B considéré comprend une pluralité de moyens d'émission/réception 56, 58, 60 qui sont prévus pour la réception de données transmises par le bus à deux fils 44 et/ou pour l'émission de données sur ce bus. Le module B représenté sur la figure 4 comprend également un synoptique polyvalent et modifiable 64 qui est réalisé à la demande au moyen de diodes électroluminescentes. Chaque grandeur physique surveillée grâce à un capteur correspond à deux diodes électroluminescentes sur ce synoptique : une diode qui émet une lumière de couleur donnée, correspondant à un fonctionnement normal de l'installation quant à la grandeur surveillée et une diode qui émet une couleur différente lorsqu'un défaut de fonctionnement est constaté. Les signaux issus du module A parviennent aux moyens 56 qui envoient ces signaux au synoptique 62 où l'affichage par diodes électroluminescentes a lieu.

A titre purement indicatif et nullement limitatif, supposons qu'on doive utiliser un capteur 43a de température. Lorsque la température t de l'installation surveillée est inférieure à un seuil de température T, la sortie du relais 52 correspondant à ce capteur de température est au niveau logique 0 et une diode verte est allumée sur le synoptique. Si la température devient supérieure ou égale à T, la sortie du relais passe au niveau logique 1 et la diode verte s'éteint tandis qu'une diode rouge s'allume.

De même, supposons qu'on doive également utiliser un capteur 43b de type cellule photoélectrique : tant qu'un faisceau lumineux reçu par cette cellule n'est pas interrompu, la sortie de la cellule est au niveau logique 0 et une diode verte correspondante est allumée sur le synoptique ; si le faisceau est interrompu, la sortie de la cellule passe au niveau logique 1, la diode verte s'éteint et une diode rouge s'allume.

Le module B représenté sur la figure 4 peut comprendre en outre des moyens 64 de télécommande manuelle du module d'action C dont il sera question par la suite, en vue d'actionner des organes pneumatiques. En effet, une signalisation de défaut de fonctionnement sur le synoptique 62 peut nécessiter l'activation de tels organes pneumatiques sur l'installation surveillée (ou sur une autre installation). A cet effet, un utilisateur placé près de l'ensemble modulaire comportant le module B agit sur la télécommande manuelle 64 pour commander le module C et donc les organes pneumatiques. Ceci a lieu par l'intermédiaire des moyens 58 qui envoient les signaux issus de la télécommande manuelle 64 au module C par l'intermédiaire du bus 44.

En variante, le module B représenté sur la figure 4 comprend non plus des moyens de télécommande manuelle mais un automate programmable 66 qui permet d'automatiser le module d'action C. Cet automate 66 reçoit des signaux du module A par l'intermédiaire des moyens 60 et, en fonction de ces signaux, donne des ordres au module C par l'intermédiaire de ces mêmes moyens 60.

Par ailleurs, l'automate programmable 66 peut envoyer les résultats de son analyse de la situation (défaut de fonctionnement d'une installation et action déclenchée pour y remédier) au poste central de surveillance, par l'intermédiaire du réseau téléphonique (et d'un module de transmission D). Au poste central, on prévoit alors un module B qui rendra compte de cette situation.

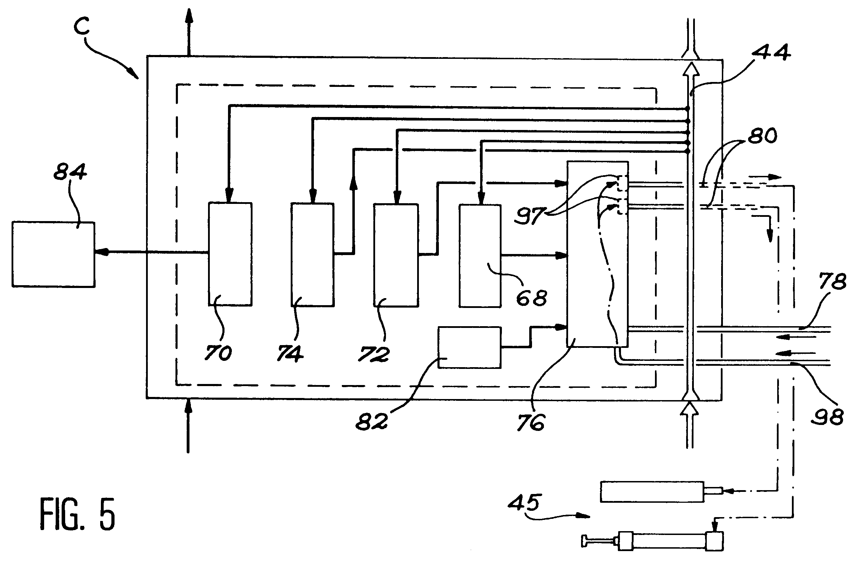

Sur la figure 5, on a représenté schématiquement un mode de réalisation particulier du module d'action C. Ce module peut recevoir des ordres du ou des modules de saisie A (action directe) ou d'un module d'analyse B du genre de celui qui a été décrit en référence à la figure 4 (action manuelle ou automatisée).

Le module C schématiquement représenté sur la figure 5 comprend une pluralité de moyens d'émission/réception 68, 70, 72, 74. Il comprend également des moyens 76 de commande d'électro-vannes 97. Ces électro-vannes sont destinées à commander respectivement des organes ou actionneurs pneumatiques 45 tels que des vérins (à simple ou double effet), des poussoirs ou des déclencheurs. Ceux-ci sont activés grâce à de l'air comprimé qui arrive aux électro-vannes par une canalisation 78 et, lorsque l'ouverture d'une électro-vanne est commandée, l'air comprimé parvient à l'organe pneumatique correspondant par une canalisation 80 pour activer cet organe.

La commande des moyens 76 est assurée par l'intermédiaire des moyens 68 qui reçoivent les signaux issus d'un module A ou d'un module B, par l'intermédiaire du bus 44. Sur le module C on peut également prévoir des moyens de commande manuelle 82 des électro-vannes.

Ce module C peut également comprendre un synoptique polyvalent et modifiable 84 prévu pour la visualisation d'informations tranduisant l'activation des organes pneumatiques mentionnés plus haut de sorte qu'un utilisateur peut, en regardant ce synoptique, s'assurer du fait que les organes pneumatiques en question ont bien été activés. Les informations affichées par ce synoptique 84 parviennent à ce dernier par l'intermédiaire des moyens 70 qui reçoivent des signaux issus de capteurs appropriés mis en place sur les installations munies des organes pneumatiques. Ces signaux sont transmis à ces moyens 70 par l'intermédiaire du bus 44, après avoir été mis en forme par un ou des modules A.

Les signaux issus des moyens 68 (activation) et 70 (visualisation) peuvent également être envoyés à distance par l'intermédiaire d'un module D (voir ci-après) et du réseau téléphonique, pour l'information des utilisateurs.

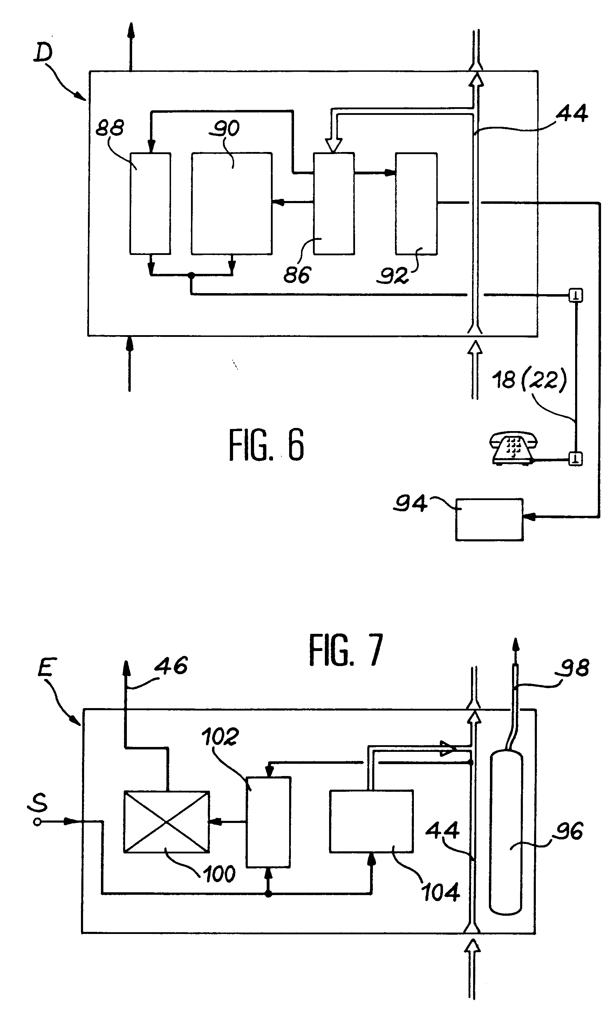

Sur la figure 6, on a représenté schématiquement un mode de réalisation particulier du module de transmission D. Ce module, prévu pour regrouper les informations issues des modules A, B et C pour les transmettre à distance, comprend des moyens de réception 86 dont l'entrée est reliée au bus 44 en vue de recevoir ces informations. Ce module comprend également un modulateur-démodulateur ou modem 88 qui reçoit en entrée les signaux issus des moyens de réception 86 pour transmettre des informations du type "tout ou rien" sur le réseau téléphonique 18 et/ou le réseau public 22.

Le module D peut comprendre en outre des moyens 90 de transmission vocale (messages, alarmes) sur le réseau téléphonique public 22. Ces moyens 90 reçoivent également en entrée les signaux "tout ou rien" issus des moyens de réception 86.

On peut également utiliser un module du genre du module D, comprenant simplement les moyens de réception 86 et les moyens de transmission vocale 90.

Le module D peut également comprendre en outre une interface 92 prévue pour la transmission des signaux issus des moyens de réception 86 et correspondant aux informations reçues par ces derniers, à un ordinateur de gestion 94 destiné à l'élaboration d'informations plus sophistiquées.

Cet ordinateur peut être situé au même endroit que l'ensemble modulaire comportant le module de transmission D ou à un autre endroit du centre, par exemple au poste central de surveillance, auquel cas les informations issues de l'interface 92 et destinées à l'ordinateur 94 sont transmises, par l'intermédiaire d'un modem non représenté et du réseau téléphonique 18, à l'ordinateur 94.

Sur la figure 7, on a représenté un mode de réalisation particulier du module d'alimentation E en énergie pneumatique et/ou électrique. Il peut comprendre une capacité pneumatique 96 (conteneur d'air ou d'azote comprimé) destinée à fournir de l'air ou de l'azote comprimé aux électro-vannes du module C par l'intermédiaire d'une canalisation 98, lorsque le site n'est pas muni d'un réseau distributeur d'énergie pneumatique ou lorsque l'alimentation normale en air comprimé des électro-vannes est coupée par suite d'un incident sur l'installation (compresseurs, circuits, ...) fournissant de l'air comprimé aux divers sites du centre.

En variante ou en plus, le module d'alimentation E peut comprendre une source de courant électrique 100, par exemple une batterie 12V ou 24V qui est chargée par l'intermédiaire de moyens de chargement 102 recevant en entrée la tension du secteur S (220V alternatif). Cette batterie fournit du courant aux autres modules de l'ensemble modulaire comportant ce module E, par l'intermédiaire de la ligne électrique 46.

La détection d'une panne de courant de la source 100 est effectuée par l'intermédiaire d'un cicuit de détection de défaut d'alimentation électrique 104 qui reçoit en entrée le secteur 220V alternatif et qui fournit en sortie, lorsque la panne se produit, des signaux de défaut d'alimentation électrique. Ces signaux sont envoyés, par l'intermédiaire du bus 44, aux moyens 86 du module de transmission D.

Les signaux du ciruit 104 sont donc envoyés, par l'intermédiaire du bus 44 et d'un module de transmission D, à un poste de surveillance, pour informer les personnes qui s'y trouvent du défaut d'alimentation en courant électrique.

La réception d'informations issues d'un module et transmises à distance par le réseau téléphonique à un autre module, se fait par l'intermédiaire d'un modem qui est relié au réseau et qui envoie les informations captées par lui aux moyens d'émission-réception appropriés de l'autre module. C'est ainsi que les modules B du poste central 20 reçoivent les informations à visualiser, par leurs moyen d'émission-réception 56 connectés à un modem.

A titre purement indicatif mais nullement limitatif, on indique ci-après des composants utilisables pour la réalisation des divers modules :
a) module A :
   - module à 4 entrées pour un maximum de 4 capteurs à sortie analogique et 4 autres entrées pour un maximum de 4 capteurs à sortie "tout ou rien" et possibilité d'extension : jusqu'à 16 de ces modules couplés ensemble (128 capteurs)
   - capteurs : cellules photoélectriques, transducteurs de pression pour gaz ou liquides, sondes de température, détecteurs de gaz, détecteurs de proximité, sondes de niveau, capteurs de bruit à seuil, détecteurs de radioactivités,
   - relais de fonction 52 : Type S de la Société ELECTROMATIC ou équivalent de la Société TELEMECANIQUE,
   - moyens d'émission 54 à 8 adresses : DUPLINE 128 de la société ELECTROMATIC ou TWIS 3 de la Société BETEA,
b) module B :
   - moyens d'émission-réception 56, 58, 60 : DUPLINE 128 de la Société ELECTROMATIC ou TWIS 3 de la Société BETEA,
   - moyens de télécommande manuelle : clavier à touches courant,
   - automate programmable 66 : PLCF 223232 ou PLCF 323232 de la Société ELECTROMATIC,
   - pour les moyens de visualisation synoptique 66, Carroyé 15×15 de la Société ENTRELEC, possibilité d'utiliser des afficheurs alphanumériques de la Série DAR 144F de la Société METRIX,
c) module C :
   - moyens d'émission-réception 68, 70, 72, 74 : DUPLINE 128 de la Société ELECTROMATIC ou TWIS 3 de la Société BETEA,
   - moyens de commande manuelle 82 : clavier à touches courant,
   - moyens 76 de commande d'électrovannes : bloc d'électrovannes sur eurocarte PE 004-002 de la Société STAIGER,
d) module D :
   - moyens de réception 86 : DUPLINE 128 de la Société ELECTROMATIC,
   - modem 88 : FMX 1902 de la Société ELECTROMATIC,
   - moyens de transmission vocale 90 : STV 3502 VBE de la Société STRATEL,
   - interface 92 : RS 232 C FMX 1911 de la Société ELECTROMATIC,
   - ordinateur 94 : micro-ordinateur de type Personal Computer compatible,
e) module E :
   - moyens de chargement 102 : I.C.P. de la Société SAFT,
   - circuit de détection 104 : S180-156 de la Société ELECTROMATIC.

## Revendications

1. Système de surveillance d'installations industrielles (8, 10, 12, 14, 16) réparties sur une pluralité de sites, certaines des installations (8, 12, 14, 16) étant surveillées à distance à partir d'un poste de surveillance (20) tandis que d'autres installations (10) le sont à l'endroit où elles se trouvent, système caractérisé en ce qu'il comprend pour chaque installation, un ou plusieurs capteurs (43) de grandeurs physiques qui sont relatives à cette installation et sont à surveiller, ces capteurs étant prévus pour fournir, sous forme de signaux électriques, des informations relatives à ces grandeurs physiques, et un ensemble modulaire (28) qui est électriquement relié aux capteurs et prévu pour traiter ces informations, en ce que chaque ensemble modulaire comprend au moins un module (A), ce module étant appelé module de saisie et prévu pour recevoir les informations fournies par les capteurs, pour transformer ces informations en états binaires et pour envoyer ces informations ainsi transformées à d'autres modules que l'ensemble modulaire est susceptible de comporter, à savoir :
- un module (B) appelé module d'analyse, prévu au moins pour visualiser les états binaires fournis par le module de saisie, et
- un module (C) appelé module d'action, prévu pour déclencher, sur ordre d'au moins l'un des modules de saisie et d'analyse, des organes pneumatiques (45), et en ce que chaque ensemble modulaire correspondant à une installation à surveiller à distance comprend en outre un module (D) appelé module de transmission, prévu pour transmettre à distance des informations susceptibles d'être fournies par les modules de saisie, d'analyse et d'action correspondants, par l'intermédiaire d'un réseau téléphonique (18, 22) qui relie les sites les uns aux autres et au poste de surveillance, chaque module de transmission (D) étant connecté à ce réseau téléphonique, le poste de surveillance comportant des modules d'analyse (B) permettant la visualisation d'informations qui sont fournies par les ensembles modulaires associés aux installations à surveiller à distance et qui sont transmises par le réseau téléphonique.

2. Système selon la revendication 1, caractérisé en ce qu'il comprend en outre d'autres modules d'analyse (B) prévus pour la surveillance à distance de certaines installations à partir d'autres postes de surveillance reliés au réseau téléphonique.

3. Système selon l'une quelconque des revendications 1 et 2, caractérisé en ce que chaque ensemble modulaire comprend en outre un module (E) d'alimentation, prévu pour alimenter, en cas de besoin, les autres modules de cet ensemble en énergie électrique et/ou les organes pneumatiques en énergie pneumatique par l'intermédiaire du module d'action (C).

4. Système selon l'une quelconque des revendications 1 à 3, caractérisé en ce que certains (43a) des capteurs associés à l'ensemble modulaire sont aptes à fournir en sortie des informations sous forme de signaux analogiques et en ce que chaque module de saisie (A) comprend :
- des relais de fonction (52) à seuils réglables, ces seuils étant destinés à être préréglés par les utilisateurs du système, chaque relais de fonction étant prévu pour recevoir les informations fournies par l'un de ces capteurs, pour comparer ces informations au seuil correspondant et pour transformer lesdites informations en indications tout ou rien sous forme de signaux numériques, suivant que le seuil est atteint ou pas, et
- des moyens d'émission (54) prévus pour envoyer ces signaux numériques aux autres modules que l'ensemble modulaire est susceptible de comporter.

5. Système selon la revendication 4, caractérisé en ce qu'il comprend en outre, pour une ou plusieurs installations à surveiller, d'autres capteurs (43b) prévus pour fournir directement des indications tout ou rien sous forme de signaux numériques, ces derniers étant envoyés à l'entrée desdits moyens d'émission (54) correspondant à ces installations.

6. Système selon l'une quelconque des revendications 4 et 5, caractérisé en ce que le module d'analyse (B) comprend :
- des moyens de visualisation synoptique (62), prévus pour la visualisation des états binaires fournis par chaque module de saisie (A) associé, et
- des moyens d'émission-réception (56) prévus pour recevoir les signaux relatifs aux états binaires fournis par ce module de saisie et pour commander en conséquence les moyens de visualisation synoptique.

7. Système selon la revendication 6, caractérisé en ce que le module d'analyse (B) est associé à un module d'action (C) et comprend en outre :
- des moyens (64) de télécommande manuelle d'un ou de plusieurs organes pneumatiques (45) en fonction des états binaires visualisés, ces moyens de télécommande étant prévus pour fournir en sortie des signaux de commande desdits organes, et
- des moyens d'émission-réception (58) prévus pour recevoir ces signaux de commande et pour envoyer en conséquence au module d'action des signaux d'activation desdits organes.

8. Système selon l'une quelconque des revendications 4 et 5, caractérisé en ce que le module d'analyse (B) est associé à un module d'action (C) et comprend :
- un automate programmable (66) prévu pour la commande d'un ou de plusieurs organes pneumatiques (45) en fonction de signaux fournis par le module de saisie associé (A), cet automate programmable étant prévu pour fournir en sortie des signaux de commande desdits organes, et
- des moyens d'émission-réception (60) prévus pour transmettre à l'automate programmable les signaux fournis par le module de saisie, pour recevoir les signaux de commande issus de l'automate programmable et pour envoyer en conséquence au module d'action des signaux d'activation desdits organes.

9. Système selon l'une quelconque des revendications 4 à 8, caractérisé en ce que le module d'action (C) comprend :
- des moyens (76) de commande d'électrovannes (97) prévues pour ouvrir ou fermer des circuits pneumatiques (80) qui sont reliés aux organes pneumatiques (45) et sont destinés à envoyer un gaz comprimé dans ces organes pneumatiques pour commander ceux-ci, et
- des moyens d'émission-réception (68) prévus pour recevoir des signaux d'activation des organes pneumatiques, issus du module de saisie et/ou du module d'analyse et pour agir en conséquence sur les moyens de commande des électrovannes.

10. Système selon la revendication 9, caractérisé en ce que le module d'action (C) comprend en outre :
- des moyens (84) de visualisation synoptique des actions déclenchées par ce module d'action, et
- des moyens (70) d'émission-réception prévus pour recevoir les signaux correspondant à des capteurs qui détectent l'activation des organes pneumatiques et pour commander en conséquence les moyens de visualisation synoptique associés.

11. Système selon l'une quelconque des revendications 4 à 10, caractérisé en ce que le module (D) de transmission comprend :
- un modulateur-démodulateur (88) prévu pour la transmission, par l'intermédiaire du réseau téléphonique, des informations susceptibles d'être fournies par les modules de saisie (A), d'analyse (B) et d'action (C), et
- des moyens (86) de réception prévus pour recevoir des signaux issus des modules de saisie, d'analyse et d'action, et pour commander en conséquence le modulateur-démodulateur.

12. Système selon la revendication 11, caractérisé en ce que le module de transmission (D) comprend en outre au moins l'un des deux moyens suivants :
- un transmetteur vocal (90) prévu pour donner l'alarme à distance par l'intermédiaire du réseau téléphonique,
- une interface (92) pour calculateur (94), ce calculateur étant destiné à traiter les informations fournies par les modules de saisie (A), d'analyse (B) et d'action (C).

13. Système selon l'une quelconque des revendications 9 et 10, caractérisé en ce que le module d'alimentation (E) comprend une capacité pneumatique (96) prévue pour alimenter en gaz comprimé lesdits organes pneumatiques, par l'intermédiaire des électrovannes (97) du module d'action (C).

14. Système selon la revendication 11, caractérisé en ce que le module d'alimentation (E) comprend :
- une source de courant électrique (100) qui est prévue pour alimenter les autres modules (A, B, C, D) en courant électrique, et
- des moyens (104) de détection de défaut de fonctionnement de cette source de courant électrique (100), prévus pour informer le module de transmission (D) de ce défaut.

## Patentansprüche

1. Überwachungssystem für industrielle Einrichtungen (8, 10, 2, 14, 16), die auf eine Anzahl von Orten aufgeteilt sind, wobei bestimmte Einrichtungen (8, 12, 14, 16) aus der Ferne durch einen Überwachungsposten (20) überwacht werden, während andere Einrichtungen (10) es an dem Ort werden, wo sie sich befinden, **dadurch gekennzeichnet, daß** das System für jede Einrichtung ein oder mehrere Sensoren (43) für physikalische Größen umfaßt, die in Bezug zu dieser Einrichtung stehen und zu überwachen sind, wobei diese Sensoren vorgesehen sind, um Informationen in Bezug auf diese physikalischen Größen in Form von elektrischen Signalen zu liefern, und das System weiterhin eine modulare Einheit (28) umfaßt, die elektrisch mit den Sensoren verbunden und vorgesehen ist, um diese Information zu verarbeiten, und daß jede modulare Einheit mindestens ein Modul (A) umfaßt, wobei dieses Modul das Erfassungsmodul genannt wird und vorgesehen ist, um die Informationen aufzunehmen, die von den Sensoren geliefert werden, um diese Informationen in den binärem Zustand zu transformieren und um diese so transformierten Informationen zu anderen Modulen zu senden, welche die modulare Einheit umfassen kann, nämlich:
- ein Modul (B), das Analysemodul genannt wird und mindestens dazu vorgesehen ist, um die binären Zustände, die von dem Erfassungsmodul geliefert werden, sichtbar zu machen, und
- ein Modul (C), das Aktionsmodul genannt wird und vorgesehen ist, um in der Reihenfolge von mindestens einem der Erfassungsmodule und der Analysemodule ein pneumatisches Element (45) auszulösen, und daß jede modulare Einheiten, die einer von Ferne zu überwachenden Einrichtung entspricht, außerdem ein Modul (D) umfaßt, das Übertragungsmodul genannt wird und vorgesehen ist, um über eine Strecke Informationen zu übertragen, die von den entsprechenden Erfassungsmodulen, den Analysemodulen und den Aktionsmodulen geliefert werden, mit Hilfe eines Telefonnetzes (18, 22), das die Orte untereinander und den Überwachungsposten verbindet, wobei jedes Übertragungsmodul (D) mit dem Telefonnetz verbunden ist und wobei der Überwachungsposten das Analysemodule (B) umfaßt, das die Anzeige der Informationen erlaubt, welche die modularen Einheiten liefern, die mit den von Ferne zu überwachenden Einheiten verbunden sind und die durch das Telefonnetz übertragen werden.

2. System nach Anspruch 1, **dadurch gekennzeichnet, daß** es außerdem andere Analysemodule (B) umfaßt, die zur Fernüberwachung von bestimmten Einrichtungen auf der Basis von anderen Überwachungsposten vorgesehen sind, die mit dem Telefonnetz verbunden sind.

3. System nach einem der vorangegangenen Ansprüche 1 und 2, **dadurch gekennzeichnet, daß** jede modulare Einheit außerdem ein Versorgungsmodul (E) umfaßt, das im Bedarfsfall vorgesehen ist, um die anderen Module dieser Einheit mit elektrischer Energie und/oder die pneumatischen Elemente mit pneumatischer Energie mit Hilfe des Aktionsmoduls (C) zu versorgen.

4. System nach einem der vorangegangenen Ansprüche 1 bis 3, **dadurch gekennzeichnet, daß** bestimmte Sensoren (43a) die mit der modularen Einheit verbunden sind, geeignet sind, Informationen in Form von analogen Signalen auszugeben, und daß jedes Erfassungsmodul (A) umfaßt:
- Funktionsrelais (52) mit regelbaren Schwellen, wobei die Schwellen dazu bestimmt sind, durch die Verwender des Systems vorher eingestellt zu werden, und wobei jedes Funktionsrelais vorgesehen ist, um die Informationen, die durch einen der Sensoren geliefert werden, zu empfangen und um diese Informationen mit der entsprechenden Schwelle zu vergleichen und um die besagten Informationen ganz oder gar nicht in Form von numerischen Signalen zur Anzeige zu bringen, je nachdem die Schwelle erreicht ist oder nicht, und
- Sendevorrichtungen (54), die vorgesehen sind, um diese numerischen Signale an die anderen Module der modularen Einheit zu senden.

5. System nach Anspruch 4, **dadurch gekennzeichnet, daß** es außerdem für eine oder mehrere zu überwachende Einrichtungen andere Sensoren (43b) umfaßt die vorgesehen sind, um direkt Anzeigen ganz oder gar nicht in Form von numerischen Signalen zu liefern, wobei die letzteren auf den Eingang der besagten Sende-vorrichtungen (54) gegeben werden, die diesen Einrichtungen entsprechen.

6. System nach einem der vorangegangenen Ansprüche 4 und 5, **dadurch gekennzeichnet, daß** das Analysemodul (B) umfaßt:
- synoptische Anzeigevorrichtungen (62), die vorgesehen sind, die binären Zustände anzuzeigen, die von jedem assoziierten Erfassungsmodul (A) geliefert werden und
- Sende-Empfangsvorrichtungen (56), die vorgesehen sind, um die Signale relativ zu den binären Zuständen, welche durch das Erfassungsmodul geliefert werden, zu empfangen und um demzufolge die synoptischen Anzeigevorrichtungen zu steuern.

7. System nach Anspruch 6, **dadurch gekennzeichnet, daß** das Analysemodul (B) mit einem Aktionsmodul (C) verbunden ist und außerdem umfaßt:
- manuelle Fernsteuerungsvorrichtungen (64), von einem oder mehreren pneumatischen Elementen (45) in Abhängigkeit von den angezeigten binären Zuständen, wobei die Fernsteuerungsvorrichtungen vorgesehen sind, um ein Steuerungsausgangssignal der besagten Teile zu liefern und
- Sende-Empfangsvorrichtungen (58), die vorgesehen sind, um die Steuersignale zu empfangen und um infolgedessen Aktivierungssignale der besagten Elemente an das Aktionsmodul zu senden

8. System nach einem der vorangegangenen Ansprüche 4 und 5, **dadurch gekennzeichnet, daß** das Analysemodul (B) mit einem Aktionsmodul (C) verbunden ist und umfaßt:
- einen programmierbaren Automaten (66), der vorgesehen ist, um einen oder mehrere der pneumatischen Elemente (45) in Abhängigkeit von den Signalen zu steuern, die von dem assoziierten Erfassungsmodul (A) geliefert werden, wobei dieser programmierbare Automat vorgesehen ist, um Steuerungsausgangssignale der Elemente zu liefern, und
- Sende-Empfangsvorrichtungen (60), die vorgesehen sind, um an den programmierbaren Automaten Signale zu senden, die von dem Erfassungsmodul geliefert werden, um die Steuerungssignale, die von dem programmierbaren Automaten ausgegeben werden, zu empfangen und um infolgedessen an das Aktionsmodul Aktivierungssignale für die besagten Elemente zu senden.

9. System nach einem der vorangegangenen Ansprüche 4 - 8, **dadurch gekennzeichnet, daß** das Aktionsmodul (C) umfaßt:
- Steuerungsvorrichtung (76) für Magnetventile (97), die vorgesehen sind, um die pneumatischen Kreise (80) zu öffnen oder zu schließen, die mit den pneumatischen Elementen (45) verbunden und bestimmt sind, ein komprimiertes Gas in diese pneumatischen Elemente zu leiten, um diese zu steuern und
- Sende-Empfangsvorrichtungen (68), die vorgesehen sind, um Aktivierungssignale der pneumatischen Elemente zu empfangen, die von dem Erfassungsmodul und/oder Analysemodul ausgegeben werden, und um infolgedessen die Steuerungsvorrichtungen der Magnetventile zu aktivieren.

10. System nach Anspruch 9, **dadurch gekennzeichnet, daß** das Aktionsmodul (C) außerdem umfaßt:
- synoptische Anzeigevorrichtungen (84) der durch dieses Aktionsmodul ausgelösten Aktionen und
- Sende-Empfangsvorrichtungen (70), die vorgesehen sind, um die Signale zu empfangen, die den Sensoren entsprechen, die die Aktivierung der pneumatischen Elemente feststellen, und um infolgedessen die assoziierten synoptischen Anzeigevorrichtungen zu steuern.

11. System nach einem der Ansprüche 4 - 10, **dadurch gekennzeichnet, daß** das Übertragungsmodul (D) umfaßt:
- einen Modulator/Demodulator (88), der mit Hilfe des Telefonnetzes zur Übertragungung der Informationen vorgesehen ist, die von den Erfassungsmodulen (A), Analysemodulen (B) und Aktionsmodulen (C) geliefert werden und
- Empfangsvorrichtungen (86), die vorgesehen sind, um die Signale zu empfangen, die von den Erfassungsmodulen, Analysemodulen und Aktionsmodulen ausgegeben werden, und um infolgedessen den Modulator/Demodulator zu steuern.

12. System nach Anspruch 11, **dadurch gekennzeichnet, daß** das Übertragungsmodul (D) außerdem mindestens eine der zwei folgenden Vorrichtungen umfaßt:
- einen Stimmübertrager (90), der vorgesehen ist, aus der Distanz Alarm mit Hilfe des Telefonnetzes zu geben,
- eine Schnittstelle (92) für einen Rechner (94), wobei dieser Rechner bestimmt ist, die Informationen zu verarbeiten, die von den Erfassungsmodulen (A) den Analysemodulen (B) und den Aktionsmodulen (C) geliefert werden.

13. System nach einem der Ansprüche 9 - 10, **dadurch gekennzeichnet, daß** das Versorgungsmodul (E) eine pneumatische Kapazität (96) umfaßt, die vorgesehen ist, die pneumatischen Elemente mit komprimiertem Gas zu versorgen mit Hilfe der Magnetventile (97) des Aktionsmoduls (C).

14. System nach Anspruch 11, **dadurch gekennzeichnet, daß** das Versorgungsmodul (E) umfaßt:
- eine elektrische Stromquelle (100), die vorgesehen ist, die anderen Module (A, B, C, D) mit elektrischem Strom zu versorgen und
- Anzeigevorrichtungen (104) für Betriebsstörungen dieser elektrischen Stromquelle (100), die vorgesehen sind, um das Übertragungsmodul (D) von dieser Störung zu unterrichten.

## Claims

1. System for monitoring industrial installations (8, 10, 12, 14, 16) distributed over a plurality of sites, certain of the installations (8, 12, 14, 16) being remotely monitored from a monitoring station (20), whilst other installations (10) are monitored at their location, characterized in that the system comprises, for each installation, one or more sensors (43) of physical quantities relative to said installation and which have to be monitored, said sensors being provided for supplying, in the form of electrical signals, informations relative to these physical quantities, and a modular array (28) which is electrically connected to the sensors and which serves to process these informations, in that each modular array comprises at least one module (A), said module being referred to as the acquisition module and serving to receive the informations supplied by the sensors, in order to transform these informations into binary states and for supplying the thus transformed informations to other modules which the modular array may have, namely:
- a module (B), called the analysis module, at least for displaying the binary states supplied by the acquisition module, and
- a module (C) referred to as the action module and which serves to activate, on the instruction of at least one of the acquisition and analysis modules, pneumatic members (45) and in that each modular array corresponding to an installation to be remotely monitored also comprises a module (D) known as the transmission module for remotely transmitting informations which may be supplied by the acquisition, analysis and action modules corresponding thereto, by means of a telephone network (18, 22) connecting the sites to one another and to the monitoring station, each transmission module (D) being connected to said telephone network, the monitoring station having analysis modules (B) permitting the display of informations supplied by the modular arrays associated with the installations to be remotely monitored and which are transmitted by the telephone network.

2. System according to claim 1, characterized in that it also comprises other analysis modules (B) for the remote monitoring of certain installations from other monitoring stations connected to the telephone network.

3. System according to either of the claims 1 and 2, characterized in that each modular array also comprises a supply module (E) for supplying, in case of need, the other modules of said array with electrical energy and/or the pneumatic members with pneumatic energy by means of the action module (C).

4. System according to any one of the claims 1 to 3, characterized in that certain (43a) of the sensors associated with said modular array are able to supply at the output informations in the form of analog signals and in that each acquisition module (A) comprises:
- function relays (52) having regulatable thresholds, said thresholds being preregulated by system users, each function relay receiving informations supplied by one of the said sensors, in order to compare these informations with the corresponding threshold and for transforming the informations into all or nothing indications in the form of digital signals, as a function of whether or not the threshold is reached and
- transmission means (54) for supplying these digital signals to the other modules which the modular array may have.

5. System according to claim 4, characterized in that it also comprises, for one or more installations to be monitored, other sensors (43b) for directly supplying all or nothing indications in the form of digital signals, the latter being supplied to the input of said transmission means (54) corresponding to said installations.

6. System according to either one of the claims 4 and 5, characterized in that the analysis module (B) comprises:
- synoptic display means (62) for the display of binary states supplied by each associated acquisition module (A) and
- transmission-reception means (56) for receiving the signals relative to the binary states supplied by said acquisition module and for controlling as a consequence thereof the synoptic display means.

7. System according to claim 6, characterized in that the analysis module (B) is associated with an action module (C) and also comprises:
- means (64) for the manual remote control of one or more pneumatic members (45) as a function of the displayed binary states, said remote control means being provided for supplying at the output control signals for said members and
- transmission-reception means (58) for receiving these control signals and for supplying as a consequence thereof to the said action module activation signals for said members.

8. System according to any one of the claims 4 and 5, characterized in that the analysis module (B) is associated with an action module (C) and comprises:
- a programmable automaton (66) for the control of one or more pneumatic members (45) as a function of signals supplied by the associated acquisition module (A), said programmable automaton being provided for supplying at the output signals for the control of said members, and
- transmission-reception means (60) for transmitting to the programmable automaton the signals supplied by the acquisition module, for receiving the control signals from the programmable automaton and for supplying as a consequence thereof the action module with the activation signals for said members.

9. System according to any one of the claims 4 to 8, characterized in that the action module (C) comprises:
means (76) for the control of electrovalves (97) for opening or closing pneumatic circuits (80) connected to the pneumatic members (45) and which are intended to supply a gas compressed in said pneumatic members in order to control the latter and
- transmission-reception means (68) for receiving activation signals for the pneumatic members obtained from the acquisition module and/or the analysis module and for acting as a consequence thereof on the means for the control of the electrovalves.

10. System according to claim 9, characterized in that the action module (C) also comprises:
means (84) for the synoptic display of actions activated by said action module, and
- transmission-reception means (70) for receiving the signals corresponding to sensors which detect the activation of the pneumatic members and for controlling as a consequence thereof the associated synoptic display means.

11. System according to any one of the claims 4 to 10, characterized in that the transmission module D) comprises:
- a modem (88) for the transmission, by means of the telephone network, of informations liable to be supplied by the acquisition (A), analysis (B) and action (C) modules and
- reception means (86) for receiving the signals from the acquisition, analysis and action modules and for controlling the modem as a consequence thereof.

12. System according to claim 11, characterized in that the transmission module (D) also comprises at least one of the two following means:
- a voice transmitter (90) for giving a remote alarm by means of the telephone network,
- an interface (92) for the computer (94), which processes the informations supplied by the acquisition (A), analysis (B) and action (C) modules.

13. System according to either of the claims 9 and 10, characterized in that the supply module (E) comprises a pneumatic cavity (96) for supplying compressed gas to the pneumatic members by means of the electrovalves (97) of the action module (C).

14. System according to claim 11, characterized in that the supply module (E) comprises:
- an electric power supply (100) for supplying electric power to the other modules (A, B, C, D) and
- means (104) for detecting operating faults of said electric power supply (100) in order to inform the transmission module (D) of said fault.
